# EUROPEAN PATENT SPECIFICATION

(11) **EP 4 590 136 B1**
(45) Date of publication and mention of the grant of the patent: **12.11.2025**
(21) Application number: 23761481.3
(22) Date of filing: 21.08.2023
(51) Int. Cl.: A23L 27/60

(54) **VINEGAR AND OIL-IN-WATER EMULSION COMPRISING THE SAME**
ESSIG UND ÖL-IN-WASSER-EMULSION DAMIT
VINAIGRE ET ÉMULSION HUILE DANS EAU LE COMPRENANT

(30) Priority: 23.09.2022 EP 22197340
(43) Date of publication of application: 30.07.2025
(73) Proprietor: Unilever IP Holdings B.V., 6708 WH Wageningen (NL)
(72) Inventor: BEINDORFF, Christiaan, Michaël, 6708 WH Wageningen (NL); ERMACORA, Alessia, 6708 WH Wageningen (NL); MERKX, Donaldus, Wilhelmus, Hendricus, 6708 WH Wageningen (NL); SILVA PAES, Sabrina, 6708 WH Wageningen (NL); VAN ADRICHEM, Linda, Johanna, Alida, 6708 WH Wageningen (NL)
(74) Representative: Keenan, Robert Daniel
(86) International application number: PCT/EP2023/072930
(87) International publication number: WO 2024/061555

(56) References cited:
- WO-A1-2013/189709
- JP-A- 2003 235 538
- US-A1- 2005 123 655
- COCCHI M ET AL: "Evolution of 5-(hydroxymethyl)furfural and furfural in the production chain of the aged vinegar Aceto Balsamico Tradizionale di Modena", FOOD CHEMISTRY, ELSEVIER LTD, NL, vol. 124, no. 3, 1 February 2011 (2011-02-01), pages 822 - 832, XP027284213, ISSN: 0308-8146, [retrieved on 20100707]

## Description

The present invention relates to a vinegar, a process to prepare such vinegar and an oil-in-water emulsified food composition comprising such vinegar.

### Background

Oil-in-water emulsified food compositions are popular as sauces such as salad dressings, mayonnaises and mayonnaise-like variants that comprise for example a low oil level or an emulsifier different than egg yolk. Such composition are homogenous mixtures of oil droplets in a continuous water phase, wherein an emulsifier, typically egg yolk, prevents the oil droplets from coalescing. Coalescence of oil droplets results in phase separation of the emulsion, referred to as instability of the emulsions. Such oil-in-water emulsified compositions may comprise low or high levels of oil, up to levels of 85wt%.

A problem observed in these oil-in-water emulsified food compositions is oxidation of the oil. Addition of ethylenediaminetetraacetic acid (EDTA) is a known remedy against this oxidation, but its presence is not desired by many consumers, who desire a product with as few as 'chemical' ingredients as possible, and prefer reduction or even absence of EDTA.

Oil oxidation in oil-in-water emulsions is a phenomenon that is not well understood. Although several compounds have been described as 'anti-oxidants' in the literature, the effectivity of such an 'antioxidant' appears to depend heavily on the environment wherein it is present and the material that needs to be protected against oxidation. For example, a compound used in *in vivo* situations, for example as a or food supplement, to reduce the impact of free radicals on sub-cellular molecules and structures to reduce the risk of cancer, is not automatically effective as anti-oxidant in a mayonnaise to reduce the oxidation of vegetable oil. In this context, reference is made to a review paper of Ghorbani Gorji et al., Trends in Food Science & Technology 56 (2016) 88-102) wherein it is described that for example a well-known antioxidant vitamin c has no effect on oil oxidation in mayonnaise, because the oil is present in an emulsion with water. In fact, the specific emulsion environment renders it a pro-oxidant. Also, the pH of the composition appears to influence the effectivity of potential anti-oxidant compounds. The risk and impact of oil oxidation may in particular be pronounced in industrially prepared oil-in-water emulsions, because of the very small droplet size of typically below 10 micron and the concomitant high surface area. It therefore remains a trial-and-error approach to find a suitable antioxidant compound that can replace as much as possible of the EDTA that is commonly used in oil-in-water emulsified food compositions, like mayonnaise.

An additional complication in this respect is that the desired oil-in-water emulsions preferably have a light color, for example light yellow to off-white or white, to resemble the color of traditional dressing compositions, such as traditional mayonnaise. The influence of the anti-oxidant ingredient on the color of the oil-in-water emulsion therefore should be as little as possible, and preferably not noticeable by the human eye, and the color of the oil in water emulsifier comprising the anti-oxidant ingredient is preferably similar to an equivalent composition using EDTA.

WO2018/189709 describes the use of reduced grape juice, including grape balsamic vinegar, as antioxidant ingredient, to reduce the level of EDTA in oil-in-water emulsified food compositions.

WO2019/057407 describes oil-in-water emulsions comprising vinegars. It was described that such vinegars had high anti-oxidative effect in an oil-in-water emulsified food composition and could replace EDTA to a significant extent. Cocchi M et al. "Evolution of 5-(hydroxymethyl)furfural and furfural in the production chain of the aged vinegar Aceto Balsamico Tradizionale di Modena", FOOD CHEMISTRY, ELSEVIER LTD, NL, vol. 124, no. 3, 1 February 2011 (2011-02-01), pages 822-832, discloses that balsamic vinegar is manufactured by a process whereby cooked must is obtained after prolonged heating of grape juice in an open pan.

Although these patent applications describe vinegars with strong anti-oxidative effect, a need remains for other materials that are suitable to replace EDTA, at least to a considerable extend, especially in light-coloured oil-in-water emulsified food compositions such as mayonnaises, mayonnaise-like products and salad dressings, preferably wherein the anti-oxidative effect is even stronger. A need remains for an oil-in-water emulsified food composition wherein the amount of EDTA can be as low as possible, preferably wherein EDTA can be absent, because of the presence of an antioxidant ingredient that is perceived as natural by consumers in the context of and oil-in-water emulsified food composition, and wherein preferably the color of the emulsified product is not affected. The oil-in-water emulsion is preferably efficiently to be produced at a common industrial mayonnaise production line.

### Summary of the invention

Surprisingly, this problem was solved, at least partly, by a vinegar, that provides a magnificent anti-oxidant effect in the context of oil-in-water emulsified food compositions, while not providing off-color as observed by the naked eye, e.g. not affecting the natural white to light yellowish color of such compositions that resemble for example the color of traditional mayonnaise. Such vinegars are prepared by a new production method. In this manner, oil-in-water emulsified food compositions could be produced with a more powerful resistance to oil oxidation.

Accordingly, in a first aspect, the present invention relates to a process for preparing a vinegar having a sugar content below 15 wt%, preferably below 10 wt%, the process comprising providing a starting vinegar derived from dicotyledonous plant material or preparing a starting vinegar according to the steps of:
a) Providing plant-derived material in liquid form or in aqueous dispersion, wherein the material is derived from a dicotyledonous plant or part thereof,
b) Subjecting the plant-derived material to ethanol fermentation,
c) Subjecting the fermented material resulting from step b) to acetic fermentation. to result in a starting vinegar,
and applying a heating regime according to one of the following time and temperature combinations:
- 90 to 105 °C, preferably 95 to 105°C: 1 to 4 hours, preferably from 1 to 3 hours, or
- 100 to 115 °C: 30 minutes to 3 hours, preferably 30 minutes to 2.5 hours, or
- 115 to 125 °C: 20 minutes to 2.5 hours, preferably 25 minutes to 2 hours, or
- 125 to 140 °C: 5 minutes to 1 hour, preferably 10 to 30 minutes,
on the plant-derived material of step a) or on the starting vinegar.

In a second aspect, the present invention relates to a vinegar obtainable by the process of the invention.

In a third aspect, the invention relates to an oil-in-water emulsified food composition comprising a vinegar according to the invention.

In a fourth aspect, the present invention relates to the use of a vinegar of the present invention to reduce oxidation of oil in an oil-in-water emulsified food composition.

### Detailed description of the invention

### Definitions

All percentages, unless otherwise stated, refer to the percentage by weight (wt%).

"Weight ratio" means that the concentration of a first (class of) compound(s) is divided by the concentration of a second (class of) compound(s), and multiplied by 100 in order to arrive at a percentage.

"Spoonable" means that a composition is semi-solid but not free-flowing on a time scale typical for eating a meal, meaning not free-flowing within a time period of an hour. A sample of such substance is able to be dipped with a spoon from a container containing the composition.

Except in the operating and comparative examples, or where otherwise explicitly indicated, all numbers in this description indicating amounts or ratios of material or conditions of reaction, physical properties of materials and/or use are to be understood as modified by the word "about".

Features described in the context of one aspect of the invention can be applied in another aspect of the invention.

Unless otherwise specified, numerical ranges expressed in the format "from x to y" are understood to include x and y. In specifying any range of values or amounts, any particular upper value or amount can be associated with any particular lower value or amount.

### "Emulsified food composition"

In an aspect, the invention relates to an oil-in-water emulsified food composition. Examples of oil-in-water emulsions encompassed by the present invention include emulsified sauces, such as mayonnaise, and salad dressings. Preferably, the food composition is a mayonnaise or a salad dressing, and most preferably a mayonnaise.

Mayonnaise is generally known as a thick, creamy sauce that can be used as a condiment with other foods. Mayonnaise is a stable water-continuous emulsion of typically vegetable oil, egg yolk and either vinegar or lemon juice. In many countries the term mayonnaise may only be used in case the emulsion conforms to the "standard of identity", which defines the composition of a mayonnaise. For example, the standard of identity may define a minimum oil level, and a minimum egg yolk amount. Also, mayonnaise-like products having oil levels lower than defined in a standard of identity or not containing egg yolk can be considered to be mayonnaises in the context of the present invention. In the art, this kind of products may contain thickeners like starch to stabilise the aqueous phase. Mayonnaises may vary in colour, and are generally white, cream-coloured, or pale yellow. The texture may range from light creamy to thick. Generally, mayonnaise is spoonable. In the context of the present invention "mayonnaise" includes such mayonnaise and 'mayonnaise-like' emulsions. Mayonnaises in the context of the present invention do not necessarily need to conform to a standard of identity in any country.

### Process of the invention

The vinegar of the invention is prepared by providing a vinegar derived from dicotyledonous plant material. Dicotyledonous plants are one of the two groups of plants into which all flowering plants (angiosperms) can be divided. They have two embryonic leaves or cotyledons. Fruit or vegetable vinegars can be commercially derived. Such a vinegar can function as a starting vinegar in the process of the invention. Alternatively, the starting vinegar can be prepared using steps a-c.

### Step a.

In a first aspect the present invention relates to a process to prepare a vinegar. In step a) of the process, plant-derived material is provided. The material is in a liquid form or in the form of an aqueous dispersion. The plant-derived material in liquid form is preferably juice from a plant or from a part of the plant. An aqueous dispersion of plant-derived material is preferably comminuted plant material (e.g. comminuted fruit or root), comminuted plant material combined with water or plant material combined with water. Comminution can be carried out by chopping or cutting. The skilled person will appreciate that if the plant material is of a relatively small size, comminution may not be done. It is preferred though that in case a dispersion of plant material is used, the plant material is comminuted. Preferably, the plant material is juice of plant or part thereof, for example juice of a fruit, leaves or root.

The process preferably does not comprise concentration of the plant derived material and in particular, the process is conducted such that the resulting vinegar has a sugar content below 15 wt%. Preferably, the process does not comprise concentration of juice. Juice, as preferably used in step a), is preferably not concentrated juice. A relatively high sugar content may affect the color of the resulting vinegar. It is preferred, that in step a) no sugars are added, preferably that no reducing sugars are added, in addition to the plant material such as juice.

Preferably, the plant-derived material is derived from fruit, stems, leaves, roots, or a mixture thereof. Fruit is defined as part of a plant resulting from a floral ovary. It may be preferred that the plant source is not grape. For example, because the color of the resulting vinegar might be not desired, e.g. too dark, for application in light-colored to white oil-in-water emulsions. Preferred species to derive the plant material from or from which the plant material is derived in the present invention are from the group consisting of cherry, plum, tomato, apricot, apple, mango, raspberry, beetroot (beta vulgaris Conditiva Group), and pear, more preferably tomato, apricot, raspberry, red beetroot, apple and mixtures thereof. Spirit vinegar is vinegar prepared from 'spirit' that results from ethanol fermentation of sugar. The skilled person understands that spirit vinegar is not a starting vinegar in the context of the present invention, it is not derived from plant material but from sugar. It is preferred, that the plant-derived material, such as preferably derived from fruit, stems, leaves, roots or a mixture thereof comprises, but more preferably is, the total juice from such a part or from parts without removal of components. It may be preferred that water is added to the plant-derived material, *e*.*g*. in case the plant derived material is an aqueous dispersion. The plant-derived material is typically not a specific component derived from any of such parts, for example, the plant derived material is preferably not sugar or a sugar extract, as the skilled person will understand. Also, the plant source in the present invention is preferably not sugar beet (Beta vulgaris, Altissima Group).

### Step b.

In step b of the process, the plant-derived material in liquid form or in aqueous dispersion is subjected to ethanol fermentation. As such, an ethanol fermentation is known in the art. It may be preferred, that before the ethanol fermentation starts, yeast is added, preferably *Saccharomyces cerevisiae.* Step b is preferably carried out at a temperature of between 20 and 37 °C, preferably of between 20 and 35 °C, even more preferably between 25 and 32°C. Fermentation may preferably be carried out partially or complete. It may be carried out preferably till a concentration of ethanol of between 5 and 15 wt% or until complete conversion of the naturally present sugars to ethanol. Complete fermentation is preferred, which typically results in an ethanol concentration in fermented juice of between 5 and 15 wt%.

### Step c.

In step c of the process, an acetic fermentation is carried out. Such an acetic fermentation is known in the art. The mixture is preferably allowed to ferment for about 2 weeks. Fermentation can be continued preferably till an ethanol level in the fermented juice is reached of at max 2 wt%, preferably maximum 1.5 wt%, preferably maximal 1 wt%, even more preferably maximum 0.5 wt%. It may be preferred that fermentation is carried out until complete conversion of the ethanol to acetic acid. Acetic fermentation is preferably carried out at 20 to 32°C, preferably at a temperature of from 25 to 30 °C under aerobic conditions. It may be preferred, that before the acetic fermentation starts, acetic acid bacteria, preferably *Acetobacter,* is added to the material, preferably *Acetobacter aceti.* The acetic fermentation turns the plant-derived material, preferably resulting from step b) of the process, into a vinegar. The amount of acetic acid in the starting vinegar used in the invention is preferably from 1.5 to 15 wt%, preferably from 1.5 to 10 wt%, more preferably from 2 to 6 wt%, more preferably of from 2.5 to 5.5 wt%. This concentration refers to the total concentration of the acid and its corresponding salt. This amount is preferably also the amount in the vinegar of the invention, *i.e.* such as vinegar obtained with the process of the invention.

Step c) is carried out after step b). Preferably, the only fermentations that are carried out are with a yeast for ethanol fermentation and acetic acid bacteria for acetic fermentation. Preferably only with *Saccharomyces cerevisiae* and one or more of *Acetobacter* and *Gluconobacter.* For example, the process preferably does not comprise a fermentation that includes *Lactobacillus, e.g.* for reasons, of taste. The starting vinegar preferably is not prepared using *Lactobacillus* or using lactic acid fermentation.

According to the invention, the process comprises a heating step. The plant-derived material in liquid form or in aqueous dispersion is heated, or the resulting vinegar, the starting vinegar is heated. In case the process starts with providing an already prepared starting vinegar, this vinegar is heated. The production of vinegars that involves a heating step is known in the art. For example, processes are known wherein whole plants or whole plant parts are roasted before making vinegar of them, *e*.*g*. for reasons of taste or to sterilize the plant material. Without willing to be bound by theory, this approach is not suitable in the context of the invention, as a problem with roasting, *i.e.* heating of non-liquid plant material at very high temperature for relatively short time, is that the resulting vinegar comprises roasting compounds, *e*.*g*. specific compounds resulting from burned plant parts, that make the vinegar too dark to be used in mayonnaise-like products, as it would affect the light color of such products. Moreover, by roasting, typically the outside of a plant part is subjected to very high heat, while the liquid within the plant material, especially at the more inner part, will not reach very high temperatures, in any case not above its boiling point, and only for very short time. Other processes in the art use sterilization of ingredients, wherein only a very short heating period is used, not to affect the taste.

It is the specific time-temperature regime applied to the liquid or aqueous plant material in step a) or to the provided starting vinegar or starting vinegar resulting from step c) that provides the desired attributes of the present invention. Accordingly, the process further comprises the step of applying heating to a temperature and time of one of the following regimes:
- 90 to 105 °C, preferably 95 to 105°C: 1 to 4 hours, preferably from 1 to 3 hours, or
- 100 to 115 °C: 30 minutes to 3 hours, preferably 30 minutes to 2.5 hours, or
- 115 to 125 °C: 20 minutes to 2.5 hours, preferably 25 minutes to 2 hours, or
- 125 to 140 °C: 5 minutes to 1 hour, preferably 10 to 30 minutes.

Preferably, heating is applied according to the following regime:
- 100 to 115 °C: 30 minutes to 3 hours, preferably 30 minutes to 2.5 hours, or
- 115 to 125 °C: 20 minutes to 2.5 hours, preferably 25 minutes to 2 hours, or
- 125 to 140 °C: 5 minutes to 1 hour, preferably 10 to 30 minutes.

More preferred, heating is applied according to the following regime:
- 105 to 115 °C: 30 minutes to 3 hours, preferably 30 minutes to 2.5 hours, or
- 115 to 125 °C: 20 minutes to 2.5 hours, preferably 25 minutes to 2 hours.

Even more preferred, heating is applied according to the following regime:
- 115 to 125 °C: 20 minutes to 2.5 hours, preferably 25 minutes to 2 hours.

Most preferred, heating is applied according to the following regime:
- 115 to 125 °C: 25 minutes to 2 hours.

The heating may preferably be carried out before step b) is carried out. Alternatively, or in addition to this heating step, heating is carried out on the vinegar resulting after step c). More preferably, the heating step is applied on the starting vinegar resulting from step c) or provided starting vinegar, for optimal results.

The artisan will appreciate that the higher temperatures of these ranges can be applied for a relatively shorter time period, whereas the lower temperatures in the ranges will preferably be used with the longer time periods from the ranges, for optimal results.

To achieve the heating temperatures of above the atmospheric boiling point of the liquid plant-derived ingredient or aqueous dispersion, about 100 °C, it is preferred, that the heating is carried out under pressure, when a temperature of more than 100 °C is applied. Preferably in that case the pressure is of higher than 1 atm, preferably of between 1 and 4.1 atm. Preferably from 1.2 to 3 atm. The following preferred pressures are used:
- 90 to 105 °C, preferably 95 to 105°C: 1 to 1.25 atm.
- 105 to 115 °C: 1.2 to 1.7 atm.
- 115 to 125 °C: 1.6 to 2.3 atm.
- 125 to 140 °C: 2.2 to 4.1 atm.

This can be carried out by involving pressure cooking e.g. by use of a pressure cooker.

It was surprisingly found that a vinegar produced by the process of the invention showed a significant anti-oxidant activity on vegetable oil in the context of an oil-in-water emulsion, for example when compared to a vinegar that is prepared without the heating step.

The present invention further relates to a vinegar obtainable by, preferably which is obtained by the process of the present invention.

### Vinegar

In a further aspect, the present invention relates to a vinegar. Vinegar is known in the art and is a liquid that underwent ethanol fermentation and acetic fermentation during its production. A vinegar of the invention underwent heating at some stage during or after its production, according to a specific time-temperature regime. A compound that is formed during this process is 5-hydroxymethylfuraldehyde (HMF). The resulting vinegar according to the invention comprises HMF. It is preferably present in an amount of from 0.01 to 4 mg/gram, preferably of from 0.02 to 2 mg/gram, even more preferably of from 0.05 to 1.5 mg/gram and most preferably of between 0.1 and 1.3 mg/gram of vinegar. Indeed, starting vinegar preferably comprises less than 0.05 wt%, preferably less than 0.01 wt% HMF and is typically, and most preferably free from HMF. HMF can be measured using ¹H NMR, as known in the art.

The vinegars of the present invention appeared to be excellent in reducing oxidation in an oil-in-water emulsified food composition, and thereby allows to reduce the amount of EDTA in such compositions, preferably allows for omitting EDTA. At the same time, the process provides for a vinegar that does not significantly affect the color of oil-in-water emulsions with a light-yellowish to white color, at least not to the extent as noticeable by the naked human eye. The vinegar can be used as such, and does require a filtration step, to remove off-color providing reaction products.

Color variations are not appreciated by some consumers. In order that an emulsified food composition comprising the vinegar of the invention has a color that is not too different from the color of the food composition without the vinegar of the invention, the vinegar preferably has an absorbance at a wavelength of 420 nm ranging from 0.01 to 3.

Color can be measured as known in the art according to a CIE L*a*b* scale. In particular, vinegars are preferred having a L*a*b* color value of the vinegar is higher than 0, preferably from 0 to 90, more preferably is from 5 to 80. The b* value is preferably more than 0, preferably of between 1 and 70, even more preferably of between 5 and 70. The a * value is preferably more than 0, more preferably between 0 and 45, even more preferably between 0 and 35. Such L* values and b* values, preferably the combination of such L* and b* values of the vinegar provide food compositions according to the invention, especially mayonnaise compositions, which most resemble, with respect to color, the food compositions without the vinegar of the invention.

Caramelization reaction is not desired and typically does not occur in the process of the invention, in view of the relatively low sugar level in the plant derived material in liquid form, such as juice, in the aqueous dispersion or in the vinegar. The vinegar preferably comprises less than 0.1 wt%, more preferably less than 0.05 wt%, even more preferably less than 0.01 wt% of substances having a molecular weight of more than 20 kDa. More preferably the vinegar comprises less than 0.1 wt%, more preferably less than 0.05 wt%, even more preferably less than 0.01 wt% of substances having a molecular weight of more of more than 10 kDa. Most preferably the vinegar comprises less than 0.1 wt%, more preferably less than 0.05 wt%, even more preferably less than 0.01 wt% of substances having a molecular weight of more of more than 5 kDa. Such higher molecular weight compounds may result for example from roasting and provide undesired color effects when the vinegar is applied in light-coloured oil in water emulsions.

The water content of the vinegar is preferably of from 60 to 98 wt%, preferably of from 70 to 98 wt%, preferably of from 85 to 98 wt%, based on the weight of the vinegar.

The vinegar as used in the present invention has a low sugar content, for example for reasons of taste or process efficiency. The sugar content in the vinegar used in the composition of the invention is below 15 wt%, more preferably below 10 wt%, even more preferably below 5 wt%, even more preferably below 2 wt%, or even more preferably below 1 wt%, based on the weight of the vinegar. The sugar content may preferably be from 0.01 to 15 wt%, more preferably 0.1 to 10 wt%, even more preferably 0.1 to 5 wt%, even more preferably 0.1 to 2 wt%, even more preferably 0.1 to 1 wt%. It can be preferred that the vinegar is free from sugar. Sugar levels in the vinegar can be controlled by for example the duration that the ethanol fermentation is carried out. Without willing to be bound by theory, a more progressed fermentation process may result in better anti-oxidation capacity.

The ethanol concentration is preferably low in the vinegar. Some consumer groups may not prefer to consume ethanol. Preferably, the amount of ethanol in the vinegar used in the invention is from 0 to 2 wt%, preferably from 0 to 1.5 wt%, even more preferably from 0 to 1 wt%, even more preferably from 0 to 0.5 wt%. It is especially preferred, that the ethanol level is below 0.5 wt%, preferably below 0.2 wt%, more preferably below 0.1 wt%, based on the weight of the vinegar. It may be preferred that the vinegar is free from ethanol. Ethanol levels can be adjusted for example by the intensity or duration of the acetic acid fermentation, as the skilled person understands.

The vinegar comprises acetic acid. The acetic acid is preferably present in an amount of from 1.5 to 15 wt%, more preferably of from 1.5 to 10 wt.%, even more preferably of between 2 and 6 w%, even more preferably 2.5 to 5.5 wt%, based on the weight of the vinegar. The acetic acid content of the vinegar typically does not exceed 20 wt.%. This concentration refers to the total concentration of the acid and its corresponding salt.

### Oil-in-water emulsion

In a further aspect, the present invention relates to an oil-in-water emulsion comprising a vinegar according to the invention. It was observed, that surprisingly a vinegar according to the invention significantly decreased the sensitivity for oil oxidation. In this way, the fresh taste of the composition could be preserved for a longer time.

An oil-in-water emulsified food composition according to the invention comprises:
- Vegetable oil,
- Water,
- An oil-in-water emulsifier,
and further comprises:
- a vinegar according to the invention.

### Oil

The oil-in-water emulsified food composition according to the invention comprises vegetable oil. Vegetable oil is preferably present in an amount of from 3 to 87 wt%, more preferably from 5 to 85 wt%, more preferably 10 to 85 wt%, more preferably of from 13 to 82 wt%, even more preferably of from 65 to 82 wt, most preferably of from 70 to 80 wt%, based on the weight of the food composition.

Vegetable oil is known in the art, and includes oils derived from *e*.*g*. plants, such as from for example nuts or seeds from plants. In the context of this invention, `vegetable oil' also includes oil from algae. Preferred oils for use in the context of this invention are vegetable oils which are liquid at 20 °C, preferably, which are liquid at 5°C. Preferably the oil comprises an oil selected from the group consisting of sunflower oil, rapeseed oil, olive oil, soybean oil, and combinations of these oils. Most preferred, the oil is soybean oil or rapeseed oil.

### Water

The composition of the invention comprises water. The total amount of water in the composition is preferably of from 12 to 95 wt%, preferably of from 14 to 90 wt%. It can be preferred that water is present in a total amount of from 15 to 85 wt%, preferably in an amount of from 15 to 33 wt%, or even more preferably 17 to 25 wt%. Preferably the total amount of water is at least 14 wt%, more preferably at least 15% by weight, even more preferably at least 17%. It may be preferred that the amount of water is at least 20 wt%, *e*.*g*. if relatively low oil levels are preferred. Preferably, the concentration of total water is maximally 95 wt%, more preferably at most 90 wt%, even more preferably at most 85 wt%, more preferably at most 33 wt% or more preferred at most 25 wt%. Any combination of ranges using these mentioned end points are considered to be part of the invention as well. "Total amount of water" includes water originating from water-containing ingredients.

### Emulsifier

Preferably, the oil in water emulsified composition of the invention comprises an oil-in-water emulsifier. The oil droplets are stabilized in the continuous water phase by an emulsifier. Emulsifiers for this purpose are known. The emulsifier is preferably present in an amount of from 0.01 to 15 wt%, preferably 0.1 to 12 wt%, based on the weight of the oil-in-water emulsion. The emulsifier serves to disperse oil droplets in the continuous aqueous phase of an oil-in-water emulsion. The emulsifier preferably has a hydrophilic-lipophilic balance (HLB) of from 8 to 15, more preferably of from 10 to 14 and even more preferably of from 11 to 13. The Hydrophilic-Lipophilic Balance (HLB) of an emulsifier is a measure of the degree to which it is hydrophilic or lipophilic. The HLB value is a parameter which is describing the solubility of the surfactant. The HLB value is described by Griffin in 1950 as a measure of the hydrophilicity or lipophilicity of nonionic surfactants. It can be determined experimentally by the phenol titration method of Marszall; see "Parfumerie, Kosmetik", Vol. 60, 1979, pp. 444-448; and Rompp, Chemistry Lexicon, 8th Edition 1983, p. 1750.

The emulsifier may be of animal origin such as whey protein or egg-derived emulsifier such as egg yolk. Preferably the emulsifier comprises an oil-in-water emulsifier originating from egg, preferably from egg yolk. Preferably the composition comprises egg yolk, more preferably is egg yolk. This suitably serves as an ingredient which also provides the oil-in-water emulsifier. The presence of egg yolk may be beneficial for taste, emulsification and/or stability of the oil droplets in the composition of the invention. Egg yolk contains phospholipids, which act as emulsifier for the oil droplets.

Preferably the concentration of egg yolk in the composition of the invention ranges from 1% to 10% by weight of the composition, more preferred from 2% to 8% by weight of the composition, even more preferably from 2.5% to 6% by weight of the composition. The egg yolk may be added as egg yolk component, meaning largely without egg white. Alternatively, the composition may also contain whole egg, containing both egg white and egg yolk. The total amount of egg yolk in the composition of the invention includes egg yolk that may be present as part of whole egg. Preferably the concentration of phospholipids, preferably originating from egg yolk, ranges from 0.08% to 0.8% by weight, preferably from 0.2% to 0.5% by weight of the food composition.

Alternatively, or in addition to the egg-derived emulsifier, the composition of the invention may comprise an oil-in-water emulsifier that does not originate from egg or egg yolk. Such non-egg derived emulsifier may be derived from dairy, such as preferably whey protein or casein.

Preferably the oil-in-water emulsifier is from plant or botanical origin, and may be used native or modified. In this way a vegan oil-in-water emulsion can be created without ingredients from animal origin. Preferably the oil-in-water emulsifier comprises starch sodium octenyl succinate (European food additive E1450). This emulsifier is available commercially as for example N-creamer 46, ex Ingredion Inc. (Westchester, IL, USA).

It can also be preferred that the emulsifier is a plant-based emulsifier, such as a plant protein. Preferably plant protein is present in the composition in an amount of from 0.3 to 5 wt%, based on the weight of the composition. Preferably, the amount of plant protein is of between 0.5 and 2.5 wt%, preferably of between 0.7 and 1.5 wt%, based on the weight of the composition. An amount for example may be preferred of more than 0.5 wt%. An amount may be preferred of less than 1.1 wt%, based on the weight of the composition.

The plant protein is preferably selected from the group consisting of pulse protein, oil seed protein, potato protein and mixtures thereof. Preferably the plant protein is pulse or potato protein. Pulse is the family of *Fabaceae.* Pulse protein is preferably selected from the group consisting of pea protein, lentil protein, chickpea protein, lupin protein, faba bean protein, soy protein and mixtures thereof. Pulse protein is preferably present in a total amount of from 0.01 to 2 wt%, more preferably in an amount of from 0.03 to 1.5 wt%, based on the weight of the oil in water emulsion. More preferably, the plant protein is selected from the group consisting of potato protein, pea protein, chickpea protein, lentil protein, soy protein and mixtures thereof. It can however be preferred that the composition does not comprise soy protein. Preferably pulse protein is selected from the group consisting of pea protein, lentil protein, chickpea protein and mixtures thereof. More preferably the pulse protein is selected from the group consisting of pea protein, lentil protein and mixtures thereof. Most preferred, the pulse protein is pea protein (*pisum sativum*)*.*

Oil seed protein is preferably selected from the group consisting of rape seed protein, canola protein and mixtures thereof, preferably is rape seed protein.

Even more preferably, the emulsifier is selected from the group consisting of pea protein, chickpea protein, lentil protein, egg yolk and mixtures thereof.

The food composition of the invention preferably comprises an emulsifier selected from the group consisting of egg yolk, dairy protein, botanical protein (including plant and algae) and mixtures thereof. More preferably, the emulsifier is selected from the group consisting of phospholipid, whey protein, casein, algae protein, legume protein, OSA starch and mixtures thereof. Proteinaceous emulsifier such as whey protein, casein, algae protein, legume protein are preferably present in a total amount of from 0.01 to 2 wt%, more preferably in an amount of from 0.03 to 1.5 wt%, based on the weight of the oil in water emulsion.

### Vinegar

The vinegar of the invention is preferably present in an amount providing 0.2 to 15%, more preferably 0.2-10 wt%, even more preferably 0.5 to 7 wt% even more preferably 1 to 6 wt% acetic acid by weight of the total amount of water. In particular an amount to provide between 5 and 8 wt% acetic acid by weight of the total amount of water is preferred. Preferably, the emulsion comprises from 0.2 to 20 wt% of the vinegar of the invention, even more preferably of from 0.5 to 10 wt%, even more preferably of from 1 to 5 wt%, even more preferably of from 1 to 3 wt%, based on the weight of the oil-in-water emulsion. An in particular preferred range is from 0.5 to 3 wt% based on the weight of the oil-in-water emulsion.

Preferably the composition of the invention has a total titratable acidity ranging from 0.03% to 3% by weight expressed as acetic acid, preferably from 0.05% to 2% by weight, preferably from 0.1% to 1% by weight. Acetic acid is preferably present in an amount of more than 50 wt%, more preferably more than 80 wt%, even more preferably more than 90 wt%, even more preferably more than 95 wt% based on the weight of the total amount of acid in the composition.

### Other ingredients

The emulsified food composition of the invention preferably contains additionally other ingredients then already specifically mentioned in here. It may be preferred that the composition contains herbs and/or spices. In case such ingredients are present in the composition, then generally their total concentration is preferably at least 0.1% by weight, and preferably maximally 10% by weight, preferably maximally 5% by weight. It may be preferred that the composition comprises added flavours, more preferably oil-dissolvable flavours.

The emulsified food composition of the invention may comprise sugar and/or salt.

Total alkaline metal salt, for example sodium chloride, may be present to an extent of from 0.1 to 5 wt%, based on the weight of the composition.

It may be preferred that the oil in water emulsified food composition comprises a structurant. This is especially preferred at an oil concentration of below 75 wt%, as known in the art. Accordingly, it may be preferred that the composition comprises starch, gum, or fiber. It may however be preferred, that the composition is free of starch, gum or fiber, preferably, it may be preferred that the composition is free of starch.

The food composition of the invention may comprise a thickener. It may be preferred that the food composition comprises a thickener such as a hydrocolloid thickener. Therefore, the food composition may preferably comprise starch or gum or mixtures thereof. A preferred gum is xanthan gum. The composition may comprise starch (not being OSA starch) in an amount of from 0.1 to 8 wt%, preferably of from 0.2 to 7 wt%, more preferably of from 0.5 to 6 wt%, or even from 0.5 to 5 wt% can be preferred, based on the weight of the food product. It is preferred, that when starch or gum is present, the oil content is between 5 and 72 wt%, preferably of between 8 and 70 wt%, preferably of between 10 and 60 wt% based on the weight of the food product.

The advantage of the emulsified food composition of the invention is that the oxidation of the vegetable oil is strongly reduced as compared to compositions without the vinegar as defined herein. Therefore, the amount of EDTA which commonly is present in compositions containing vegetable oil can be strongly reduced. This way a food composition is presented to the consumer, which does not contain compounds which are often regarded to be chemical or artificial by that consumer. Hence, preferably the concentration of EDTA in the composition is lower than 0.008 wt%, preferably the concentration of EDTA is from 0 to 0.007 % by weight, preferably lower than 0.005% by weight, preferably from 0 to 0.005 wt%, preferably lower than 0.002% by weight, preferably from 0 to 0.002 wt% preferably lower than 0.001% by weight, preferably from 0 to 0.001 wt% of the composition. Most preferred EDTA is absent from the composition.

The composition may comprise mustard, *e*.*g*. as a flavour compound. Mustard may be present for example in an amount of from 0.5 to 10 wt%, more preferably 1 to 9 wt%, even more preferably 2 to 8 wt%, even more preferably of from 3 to 7 wt%. Accordingly, it may be preferred that the food product of the invention comprises allyl isothiocyanate (AITC).

### Physical properties

The rheological properties of the composition can be expressed in Stevens Value (in grams) and/or as elastic property. The Stevens Value (in grams), the consistency, is preferably of between 10 and 400 g, even more preferred between 50 g and 400 g, more preferably of between 100 and 200 g, and even more preferably of between 100 g and 150 g, as measured at 20 °C. Especially for mayonnaise and mayonnaise -like compositions, the Steven value is preferably from 50 to 400 g, preferably of from 50 to 200, even more preferably 100 to 200 g, or even 100 to 150 g, as measured at 20 °C. This is preferably assessed some time, e.g. a week, or 2 weeks, after production, when products are stabilized and typically on the shelf.

The consistency of the composition of the invention is preferably a consistency which is recognised by the consumer as the consistency of a mayonnaise, a sauce or of a salad dressing, preferably of a mayonnaise or a salad dressing, most preferably of a mayonnaise. The consistency of the compositions of the present invention can be described by their storage modulus G', measured at 1 Hz and 20°C, which is preferably within the range of 100-3500 Pa, more preferably in the range of 300-2000 Pa, most preferably in the range of 400-1500 Pa.

The droplet size D3.3 is preferably from 2 and 10 microns (see M. Alderliesten, Particle & Particle Systems Characterization 8 (1991) 237-241; for definitions of average diameters). The droplet size can be measured for example with the technique of Van Duynhoven Eur. J. Lipid Sci Technol. 109, 2007, p 1095-1103.

With regard to the color, the L* for oil in water emulsified compositions according to the invention is preferably of from 50 to 95, preferably of from 70 to 95, even more preferably of from 80 to 95, most preferably of from 85 to 95. The difference in color ΔE between the colour of a composition with and without a vinegar of the invention is calculated as follows ΔE* = SQRT(ΔL*² + Δa*² + Δb*²). The difference in color ΔE between a composition with and without a vinegar of the invention, calculated as ΔE* = SQRT(ΔL*² + Δa*² + Δb*²) is preferably of from 0 to 30, more preferably of from 0 to 20, even more preferably of from 0 to 10 and most preferably of from 0 to 5. These maximum differences in color ΔE are especially desired and preferred if the product is a mayonnaise or a salad dressing, but are not limited to these types of food product.

As the oil in water emulsion of the present invention comprises vinegar according to the invention, which is obtained with the process of the invention, the oil in water emulsion comprises HMF. The concentration of HMF is preferably of between 0.001 and 0.1, preferably of from 0.001 and 0.075 wt%, and even more preferably of between 0.001 and 0.06 wt%, based on the weight of the emulsified food composition.

The emulsified food composition of the invention preferably has a pH ranging from 2 to 5, preferably ranging from 2.5 to 4.5, more preferably of from 3.0 to 4.5.

### Preferred composition

A preferred composition is an oil-in-water emulsified food composition comprising:
- From 10 to 83 wt% of vegetable oil,
- Water in a total amount of from 14 to 85 wt%,
- Plant protein or egg yolk,
   - a vinegar according to the invention in an amount of 0.5 to 10 wt%, preferably from 1 to 5 wt%, based on the weight of the food composition,

wherein the composition has a pH of between 2.5 and 5 and
wherein the amount of EDTA is below 0.005 wt%, preferably wherein the composition is free from EDTA.

### Process to prepare an oil-in-water emulsified food composition according to the invention.

In a further aspect, the present invention relates to a method to provide an emulsified food composition according to the invention.

In particular, the invention relates to a process for manufacturing an oil-in-water emulsified food composition according to the invention, the process comprising the steps of:
a) providing a mixture comprising:
   - water,
   - oil in water emulsifier,
   - vegetable oil,
   - vinegar according to the invention,
b) Homogenizing,
to result in an oil-in-water emulsified food composition.

Preferably, the method comprises the steps of:
a) Providing a mixture comprising:
   - vegetable oil,
   - water,
   - vinegar according to the invention,
   - emulsifier,
b) Homogenizing,

to result in an oil-in-water emulsion,
wherein step a) comprises the steps of:
   - Preparing a water phase comprising water and emulsifier,
   - Preparing an oil phase comprising oil,
   - Adding the oil phase to the water phase,
wherein step b) comprises homogenizing the oil phase with the water phase to emulsify the oil phase into the water phase, preferably to an oil droplet size of D3,3 of below 10 micron, and
wherein vinegar according to the invention is added in the water phase during step a) or is added during step b), preferably is added during step b).

According to step a) of the process of the invention, a mixture is prepared comprising:
- water,
- oil in water emulsifier,
- vegetable oil,
- vinegar according to the invention

In the context of the process to prepare the oil-in-water emulsified food composition, water is preferably added (i.e. as ingredient) in step b) of the process in an amount of from 6 to 94 wt%, preferably of from 6 to 90 wt%, based on the weight of the resulting food composition. It can be preferred that water is added in a total amount of from 6 to 85 wt%, preferably in an amount of from 7 to 33 wt%, even more preferably of from 8 to 25 wt%, or even of from 8 to 20 wt%. Preferably the amount of added water is at least 6 wt%, more preferably at least 7% by weight, even more preferably at least 8%. It may be even preferably that the amount is at least 10 wt%, e.g. in case of relatively lower oil products. Preferably the amount of water added is maximally 95 wt%, more preferably at most 90 wt%, even more preferably at most 85 wt%, more preferably at most 80 wt%, even more preferably at most 33 wt%, and more preferably at most 25 wt%, based on the weight of the resulting food composition. It may be preferred that the water is added in an amount of at most 20 wt%. Any combination of ranges using these mentioned end points are considered to be part of the invention as well.

The pH of the composition can be adjusted by the use of e.g. spirit vinegar, as known in the art. This can be added into the water phase during step a) or during homogenisation step b), preferably during step b). Total vinegar is preferably added, and preferably present in the composition, in a total amount of from 1 to 20 wt%, preferably of from 1.5 to 10 wt%, preferably of from 2 to 5 wt%, based on the weight of the resulting composition.

It may be preferred, that the process comprises the steps of preparing an oil phase, comprising the vegetable oil and the preparation of a water phase, comprising water and the emulsifier, but preferably without the vinegar. The vinegar can be added to the water phase, but is preferably added during homogenisation, for optimal emulsifying results. As described above, the amount of vinegar of the invention added is preferably of from 0.5 to 20 wt%, more preferably of from 0.5 to 10 wt%, even more preferably of from 1 to 5 wt%, even more preferably of from 1.5 to 3 wt%, based on the weight of the resulting composition. A preferred range is from 0.5 to 3 wt%, more preferably of from 1 to 3 wt% based of the weight of the resulting composition.

Vegetable oil is preferably added in an amount of from 3 to 87 wt%, preferably of from 5 to 85 wt%, preferably of from 10 to 85, preferably of from 13 to 82 wt%, even more preferably of from 65 to 82 wt, most preferably of from 70 to 80 wt%, based on the weight of the resulting food composition.

The weight ratio of water to vegetable oil is preferably of from 35:65 to 15:85%, preferably of from 35:65 to 20:80, even more preferably of from 30:70 to 25:75.

The oil in water emulsifier that is added, is described above in the context of the oil in water emulsifier. It is preferably added in the amounts specified relating to that aspect of the invention, based on the weight of the resulting emulsified food composition.

Vegetable oil and emulsifier can be added in any order. Vegetable oil may be added to the water followed by addition emulsifier. Simultaneous addition of vegetable oil and plant protein to the water may be preferred. It is more preferred, that emulsifier is added to the water followed by addition of vegetable oil.

In step b) of the process, the mixture resulting from step a) is homogenised. Conventional homogenisers can be applied suitable to create an oil-in-water emulsion with a droplet size D3,3 of below 10 micron, as known to the skilled person, such as a rotor-stator homogeniser, such as a colloid mill or high shear mixing device, preferably a colloid mill, as known in the art. Homogenisation results in an emulsified food composition.

Homogenisation is preferably carried out to achieve an oil droplet size D3.3 which is preferably below 10 micron, preferably of between 2 and 10 microns, see M. Alderliesten, Particle & Particle Systems Characterization 8 (1991) 237-241; for definitions of average diameters).

Vinegar of the invention is added preferably in an amount to provide a concentration of HAc of from 0.2 to 15%, more preferably of from 0.2 to 3% acetic acid by weight of the total amount of water.

The invention may further relate to an oil in water emulsified food composition obtainable by, preferably obtained by, the process of the invention to provide an oil-in-water emulsified food composition. The CIE Lab L* value for such compositions is preferably of from 50 to 95, preferably of from 70 to 95, even more preferably of from 80 to 95, most preferably of from 85 to 95. The composition preferably comprises HMF in an amount of from 0.001 to 0.1 wt%, preferably from 0.001 to 0.075 wt%, and most preferably of between 0.001 to 0.06 wt% mg/gram. The concentration of EDTA is preferably below 0.005 wt%, preferably is absent.

### Use

In a further aspect, the invention relates to the use of a vinegar according to the invention, to reduce oxidation of oil in an oil in water emulsified food composition. In this respect, it preferably relates to the use to reduce EDTA in an oil-in-water emulsified food composition.

Preferably the food composition is free of EDTA. The vinegar of the invention preferably is present in an amount to provide 0.2 to 15%, more preferably 0.2 to 3% acetic acid by weight of the total amount of water in the food composition. The vinegar of the invention is preferably used in the emulsion in an amount of from 0.5 to 20 wt%, more preferably of from 0.5 to 10 wt%, even more preferably of from 1 to 5 wt%, even more preferably of from 1 to 3 wt%, based on the weight of the oil-in-water emulsion.

### Methods

### Texture measurements

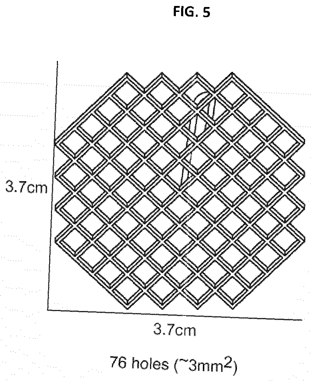

*Thickness - Stevens value:* the Stevens value is determined at 20°C by using a Stevens LFRA Texture Analyser (ex Brookfield Viscometers Ltd., UK) with a maximum load/measuring range of 1000 grams, and applying a penetration test of 25mm using a grid, at 2mm per second penetration rate, in a cup having a diameter of 65mm, that contains the emulsion; wherein the grid comprises square openings of approximately 3x3mm, is made up of wire with a thickness of approximately 1mm, and has a diameter of 40mm. One end of a shaft is connected to the probe of the texture analyser, while the other end is connected to the middle of the grid. The grid is positioned on the flat upper surface of the emulsion in the cup. Upon starting the penetration test, the grid is slowly pushed downward into the emulsion by the texture analyser. The final force exerted on the probe is recorded, giving the Stevens value in gram. A drawing of the grid is given in Figure 5. The grid is made from stainless steel, and has 76 holes, each hole having a surface area of approximately 3x3 mm.

### Consistency, elastic modulus.

These compositions are viscoelastic materials that exhibit both viscous and elastic characteristics when undergoing deformation. Viscous and elastic behaviour of materials can be measured by various instruments, of which a state of the art rheometer is a suitable instrument for the present compositions. Viscous and elastic properties by rheometer can be obtained by various methods. Oscillation measurements are suitable to characterize the compositions described in the present invention. In oscillation measurements, the elastic property is commonly characterized by the storage modulus G' and the viscous property by the loss modulus G". Both moduli are only valid in the linear deformation area, as known in the art.

### Measurement protocol:

The AR 2000 EX rheometer (TA-Instruments) is a suitable state of the art rheometer used for the analysis of the compositions of the present invention. A 4 cm steel plate geometry with 1 mm gap is a suitable geometry. Other instrument settings are known by skilled in the art operators.

### Absorbance at 420 nm

Samples of vinegar are first diluted with demineralized water (1:1 v/v) and then transferred into a micro well plate for UV-VIS analysis (UV-star-96 VWR 736-0231).

### Accelerated shelf-life test to follow lipid oxidation.

Vegetable oil is subjected to conditions which promote oxidation, without requiring the typical shelf life of 4 to 9 months of mayonnaise. Oxidation experiments are carried out during a period up to generally about 30 days, in some experiments up to 80 days, to follow the oxidation of the vegetable oil in oil-in-water emulsions.

Emulsion samples with various compositions are prepared (as described in the examples below) and 1g of each sample is filled in a capped glass vial (20ml_ volume) and kept in a temperature controlled oven at 50°C.

The oxidation of triglycerides occurs in several steps, in which the first step is the most important. This first step is the lag phase, which is the phase where there is not much oxidation, and after this phase the oxidation starts to accelerate. This means that the amount of oxidation products rapidly starts to increase. The longer the lag phase, the slower the oxidation process, and the better the result.

### Oxygen concentration in headspace

To follow oxidation of fatty acids in emulsions in the experiments, the oxygen concentration is measured in the headspace of closed jars in which emulsions are stored to follow oxidation. The lower this concentration, the more oxygen is consumed for oxidation processes. The oxygen content is determined by taking a sample of gas from the headspace with a needle through a septum in the closed lid of the jar. The oxygen concentration in the sample is determined by gas analyser.

### Colour measurement of the used vinegars

With the UltraScan VIS spectrophotometer from HunterLab (https://www.hunterlab.com/solutions/color-measurement/ultra-scan-vis) the transmission of the vinegars was measured. With the EasyMatch QC (version 4.83) software, the transmission is transferred into L* (lightness), a* (green/red) and b* (blue/yellow) values to determine the colour. The measured vinegars were not diluted before analysis.

### Color measurement of the emulsion

To assess the color of the vinegar or the effect of the vinegar on mayonnaise compositions, the L*a*b* values were measured of the vinegar or the mayonnaise compositions using a Hunterlab LabScan XE colorimeter. The color was expressed as L*a*b values, wherein L* indicates the lightness (L* = 0 yields black and L* = 100 indicates diffuse white), a* the green/red coordinate and b* is the yellow/blue coordinate, as known in the art. The difference in color ΔE between the vinegar or the color of the mayonnaise with heated vinegar and non-heated vinegar is calculated as *ΔE** = *SQRT(ΔL*²* + *Δa*²* + *Δb*²).* Color of an emulsion is preferably assessed some weeks after production, when emulsified products are stabilized and typically on the shelf.

### Methods- apricot vinegar production

Vinegar was produced by fermentation of commercially provided apricot juice.
- The alcoholic fermentation was initiated by the addition of a starter culture (*Saccharomyces Cerevisiae*)*.*
- The mixture was kept for about 1 week until complete conversion of the naturally present sugars to ethanol, at 30°C under anaerobic conditions.

The resulting fermented apricot juice comprised ethanol, typically in an amount of from 5 to 15 wt%, and was consequently subjected to an acetic acid fermentation process. This was carried out as follows:
- The acetous fermentation was also initiated by the addition of a starter culture *(Acetobacter aceti*).
- The mixture was kept for about 2 weeks until ethanol concentration was below 0.5 wt%, at 30°C under aerobic conditions.

### Method to measure HMF

Quantitative analysis of 5-hydroxymethylfuraldehyde in vinegars and oil-in-water emulsified food compositions is carried out spectroscopically (¹H-NMR). Vinegars were measured as such for the NMR analysis. For the oil-in-water emulsified food compositions, the water layer was first extracted. This could be done with organic solvents (e.g. hexane/isopropnal) or a freeze-thaw cycle to stimulate phase separation. The water layer was subsequently centrifuged at 17.000 *x g* for 5 min and supernatant was used for the NMR analysis.

200 mg of sample (vinegar or water layer) was weighed and added with 3 ml of D₂O. 600 µl of such sample mixture was added with 100 µl of CSI (Chemical Shift Indicator) solution (consisting of 10.90 mg of 3-(trimethylsilyl)propionic-2,2,3,3-d₄ acid, sodium salt, 2.30 mg of difluorotrimethyl-silanyl-methyl)phosphonic acid and 30 ml of D₂O), 100 µl of EDTA-d₁₂ solution, and 300 µl of 0.2 M phosphate buffer. The sample mixture was homogenised and centrifuged at 15000 g for 10 minutes. 650 µl of the supernatant was transferred into 5-mm NMR tubes for analysis. 1D ¹H NMR spectra were recorded with a noesygppr1d pulse sequence on a Bruker Avance III 600 NMR spectrometer, equipped with a 5-mm cryo-probe. The probe was tuned to detect ¹H resonances at 600.25 MHz. The internal probe temperature was set to 298K. 128 scans were collected in 57K data points with a relaxation delay of 10 seconds, an acquisition time of 4 seconds and a mixing time of 100 ms. Low power water suppression (16 Hz) was applied for 0.99 seconds. The data were processed in Topspin software version 3.5 pl 1 (Bruker BioSpin GmbH, Rheinstetten, Germany). An exponential window function was applied to the free induction decay (FID) with a line-broadening factor of 0.15 Hz prior to the Fourier transformation. Manual phase correction and baseline correction was applied to all spectra. The spectra were referenced against the methyl signal of 3-(trimethylsilyl)propionic-2,2,3,3-d₄ acid, sodium salt (d 0.0 ppm). The 5-hydroxymethylfuraldehyde peak at δ 6.68 ppm was used for the quantification.

### Examples

The invention is illustrated with the following non-limiting examples.

### Raw Materials

- Water: demineralised water.
- Rapeseed oil ex Cargill (Amsterdam, The Netherlands).
- Sugar: sucrose white sugar W4 ex Suiker Unie (Oud Gastel, Netherlands).
- Salt: NaCl suprasel ex Akzo Nobel (Amersfoort, Netherlands).
- EDTA: Ethylenediaminetetraacetic acid, calcium disodium complex, dehydrate; Dissolvine E-CA-10 ex Akzo Nobel (Amersfoort, Netherlands).
- Egg yolk: ex Bouwhuis Enthoven (Raalte, the Netherlands); contains 92% egg yolk and 8% kitchen salt.
- Vinegar spirit 12% ex Kühne (Hamburg, Germany)
- Raspberry vinegar: Foodelicious, Rotterdam, the Netherlands.
- Acetic acid solution 50%: Prepared in house, consisting of a 50:50 v/v% solution of acetic acid glacial (VWR, Amsterdam, the Netherlands) and demineralised water.
- Tomato vinegar: Pödör Öle und Essige, Vertrieb über Arteriomed GmbH, Grevenbroich, Germany.
- Apricot vinegar: Pödör Öle und Essige, Vertrieb über Arteriomed GmbH, Grevenbroich, Germany.
- Apricot juice: Elite Natural (Turkey)
All materials were obtained from the Netherlands unless stated otherwise.

### Example 1

### Tomato vinegar

Example 1 was conducted to exemplify the effect of a heating step on vinegar on the antioxidative effect in an oil in water emulsion. Mayonnaises were prepared according to the following recipes containing unheated tomato vinegar (Sample #2), used as a negative control, tomato vinegar heated for 30 minutes at 100 °C (Sample #3), and tomato vinegar heated at 121 °C for 30 minutes (Sample #4). A sample wherein spirit vinegar (Sample #1) was used functioned as a control.

**Table 1 Compositions of mayonnaises containing different tomato vinegars.**

| *Ingredient* | *Concentration [wt%]* | | | |
|---|---|---|---|---|
| | *#1* | *#2* | *#3* | *#4* |
| Water | 14.27 | 14.03 | 14.38 | 14.38 |
| Oil (rapeseed) | 70 | 70 | 70 | 70 |
| Sugar | 1.3 | 1.3 | 1.3 | 1.3 |
| Salt | 1.49 | 1.49 | 1.49 | 1.49 |
| Egg yolk | 4.2 | 4.2 | 4.2 | 4.2 |
| Flavours | 0.33 | 0.33 | 0.33 | 0.33 |
| Starch | 0.6 | 0.6 | 0.6 | 0.6 |
| Spirit vinegar | 2.6 | | | |
| Tomato vinegar, unheated | | 3 | | |
| Tomato vinegar, heated 100 °C | | | 3 | |
| Tomato vinegar, heated 121 °C | | | | 3 |
| Acetic acid solution (50% w/w) | 5.21 | 5.05 | 4.7 | 4.7 |

The mayonnaises were prepared at bench scale (0.25 kg emulsion), following a 2-step procedure. In the first step, the mayonnaise aqueous phase was prepared by mixing water, egg, sucrose and salt in an Esco-Labor processing plant type EL10 (Riehen, Switzerland). Subsequently the oil was slowly added to the aqueous phase, under stirring conditions. After the oil had been homogenised into a coarse emulsion, the latter was pumped into a Labor-Pilot 2000/4 colloid mill (IKA Labor, Staufen, Germany), equipped with module MK. The speed of the colloid mill was set to 6000 rpm. In the second step, the fine emulsion obtained as just described was divided into a number of aliquots of 250 g and each aliquot was added with a specific source of vinegar and homogenised with a hand mixer. The compositions had a pH of 3.8. Droplet size was below 10 micron.

**Table 2 Visual assessment of mayonnaises containing tomato vinegar**

| *Sample* | *Appearance assessment mayonnaise* |
|---|---|
| Spirit vinegar | Off-white. Similar to commercial mayonnaise. |
| Tomato vinegar unheated | Off-white. Similar to commercial mayonnaise. |
| Tomato vinegar heated 100 °C | Off-white. Similar to commercial mayonnaise. |
| Tomato vinegar heated 121 °C | Off-white. Similar to commercial mayonnaise. |

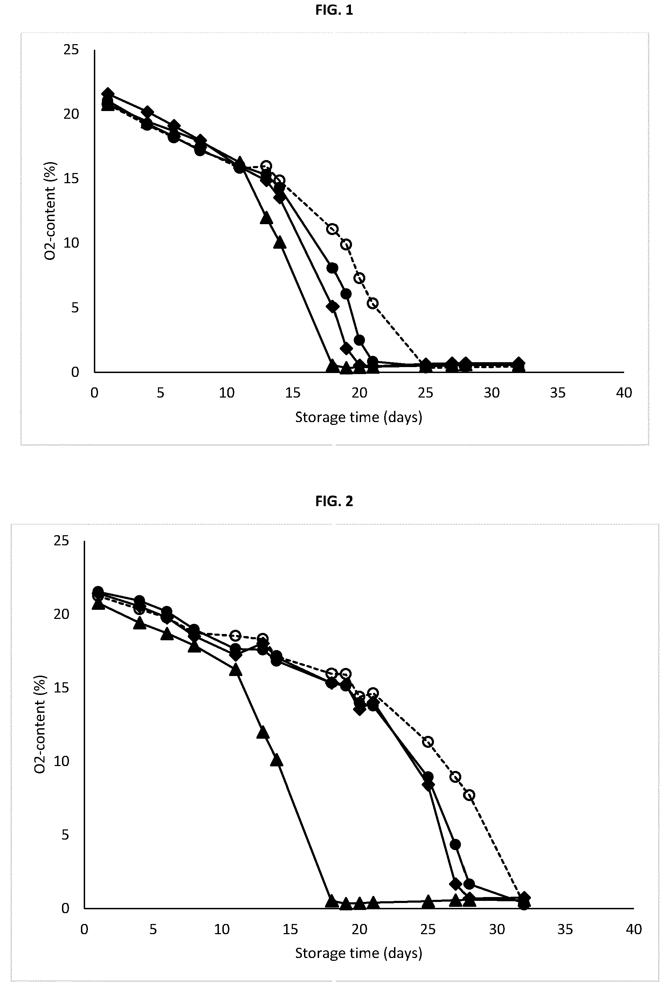

Oxygen concentration in the headspace during storage trial of mayonnaises at 50°C was determined, to see the influence of the vinegar (see Figure 1). Mayonnaises containing spirit vinegar shows a rapid decrease of oxygen concentration in the headspace, indicating that oxidation of oil is most rapid in these mayonnaises. The mayonnaises with unheated tomato vinegar (sample 2) shows a much slower decrease of oxygen concentration. Heated tomato vinegars show an even slower decrease of oxygen. The tomato vinegar heated at 100 °C showed a lower antioxidative effect compared to tomato vinegars that was heated at 120 C. The color of the mayonnaises was off-white and similar to a commercial mayonnaise. This shows that heating the vinegar increases the antioxidant effect in oil in water emulsions. In this manner, a greater amount of EDTA can be replaced by natural antioxidant vinegar, without negatively affecting the color appearance of the mayonnaise.

The legenda of figure 1 is as follows:
- **▲-** spirit vinegar
- **◆-** tomato vinegar, unheated
- **•-** tomato vinegar 30 min, 100°C
- ∘- tomato vinegar 30 min, 121°C

### Example 2

### Apricot vinegar

An experiment similar to Example 1 was carried out with apricot vinegar (commercially supplied). The mayonnaise samples were prepared in the same way as done for example 1. Instead of tomato vinegar, apricot vinegar was used. Mayonnaises contained unheated apricot vinegar (Sample #6), used as a negative control, apricot vinegar heated for 30 minutes at 100 °C (Sample #7), and apricot vinegar heated at 121 °C for 30 minutes (Sample #8). A sample wherein spirit vinegar (Sample #5) was used functioned as a control. The compositions had a pH of 3.8. Droplet size was below 10 micron.

**Table 2 Compositions of mayonnaises containing different apricot vinegars.**

| *Ingredient* | *Concentration [wt%]* | | | |
|---|---|---|---|---|
| | *#5* | *#6* | *#7* | *#8* |
| Water | 14.27 | 13.98 | 13.98 | 13.98 |
| Oil (rapeseed) | 70 | 70 | 70 | 70 |
| Sugar | 1.3 | 1.3 | 1.3 | 1.3 |
| Salt | 1.49 | 1.49 | 1.49 | 1.49 |
| Egg yolk | 4.2 | 4.2 | 4.2 | 4.2 |
| Flavours | 0.33 | 0.33 | 0.33 | 0.33 |
| Starch | 0.6 | 0.6 | 0.6 | 0.6 |
| Spirit vinegar | 2.6 | | | |
| Apricot vinegar, unheated | | 3 | | |
| Apricot vinegar, heated 100 °C | | | 3 | |
| Apricot vinegar, heated 121 °C | | | | 3 |
| Acetic acid solution (50% w/w) | 5.21 | 5.1 | 5.1 | 5.1 |

**Table 3 Visual assessment of mayonnaises containing apricot vinegar**

| *Sample* | *Appearance assessment mayonnaise* |
|---|---|
| Spirit vinegar | Off-white. Similar to commercial mayonnaise. |
| Apricot vinegar unheated | Off-white. Similar to commercial mayonnaise. |
| Apricot vinegar heated 100 °C | Off-white. Similar to commercial mayonnaise. |
| Apricot vinegar heated 121 °C | Off-white. Similar to commercial mayonnaise. |

Oxygen concentration in the headspace during storage trial of mayonnaises at 50°C was determined, to see the influence of the vinegar (see Figure 2). Mayonnaises containing spirit vinegar shows a rapid decrease of oxygen concentration in the headspace, indicating that oxidation of oil is most rapid in these mayonnaises. The mayonnaises with unheated apricot vinegar (sample #6) shows a much slower decrease of oxygen concentration. The apricot vinegar heated at 100 °C showed a slightly stronger antioxidative effect. Apricot vinegar that was heated at 121 °C showed a much stronger antioxidative effect than the control. The color of the mayonnaises was off-white and similar to a commercial mayonnaise (Table 3). This shows that heating the vinegar increases the antioxidant effect in oil in water emulsions. In this manner, a greater amount of EDTA can be replaced by natural antioxidant vinegar, without negatively affecting the color appearance of the mayonnaise.

The legenda of figure 2 is as follows:
- **▲-** spirit vinegar
- ◆- apricot vinegar, unheated
- - apricot vinegar heated 30 min. at 100°C
- ∘- apricot vinegar heated 30 min. at 121°C

### Example 3

### Apricot vinegar, different heating time, heating of juice

Mayonnaise samples were prepared as carried out in Example 1, with the difference that vinegar was added before homogenisation in the homogenisation device. The compositions have a pH of 3.8. Droplet size was below 10 micron.

The vinegar that was used was homemade apricot vinegar. The effect of heating the apricot juice, before preparing vinegar from it, was assessed. The apricot juice was heated for 30 minutes at 121 °C (sample #11) or for 90 minutes at 121 °C (sample #12).

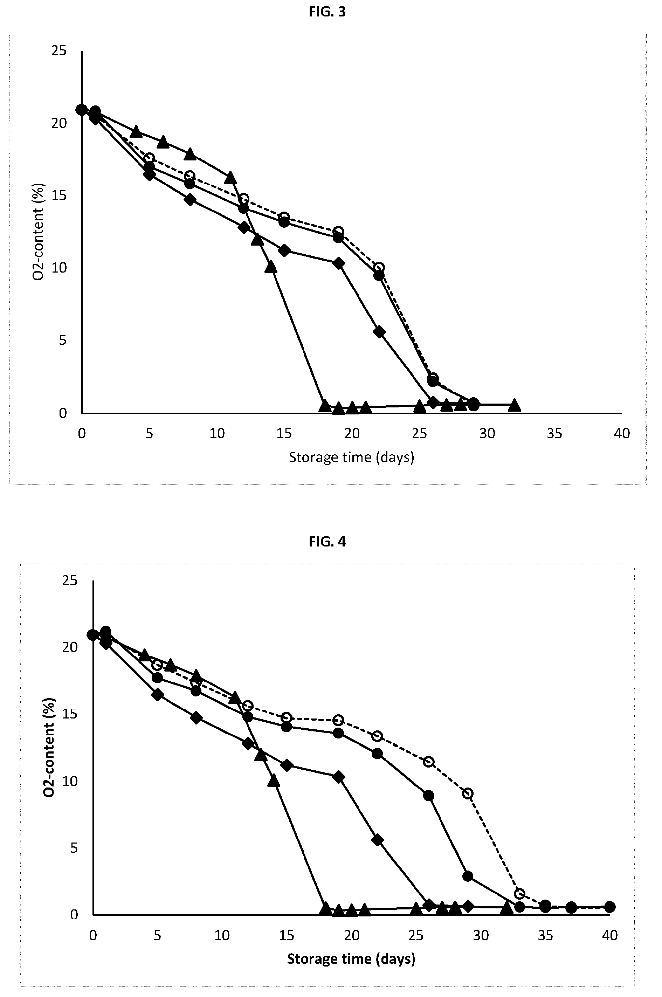

Oxygen concentration in the headspace during storage trial of mayonnaises at 50°C was determined, to see the influence of the vinegar (see Figure 3). Mayonnaises containing spirit vinegar (sample #9) shows a rapid decrease of oxygen concentration in the headspace, indicating that oxidation of oil is most rapid in these mayonnaises. The mayonnaise with apricot vinegar prepared from unheated apricot juice (sample #10) shows a much slower decrease of oxygen concentration. The apricot vinegars prepared from either apricot juice heated for 30 minutes (sample #11) or for 90 minutes (sample #12) showed a much stronger antioxidative effect than the control. The increase in heating time to 90 minutes of the apricot juice, before preparing vinegar from it, did not show a very different effect on the antioxidative effect in the mayonnaise, compared to 30 minutes heating of the juice. The color of the mayonnaises was off-white and similar to a commercial mayonnaise (Table 4). This shows that heating the juice, before preparing vinegar, increases the antioxidant effect in oil in water emulsions. In this manner, a greater amount of EDTA can be replaced by natural antioxidant vinegar, without negatively affecting the color appearance of the mayonnaise.

**Table 3 Compositions of mayonnaises containing different apricot vinegars.**

| *Ingredient* | *Concentration [wt%]* | | | |
|---|---|---|---|---|
| | *#9* | *#10* | *#11* | *#12* |
| Water | 15.08 | 13.19 | 14.05 | 12.97 |
| Oil (rapeseed) | 75 | 75 | 75 | 75 |
| Sugar | 1.3 | 1.3 | 1.3 | 1.3 |
| Salt | 1.49 | 1.49 | 1.49 | 1.49 |
| Egg yolk | 4.2 | 4.2 | 4.2 | 4.2 |
| Flavours | 0.33 | 0.33 | 0.33 | 0.33 |
| Spirit vinegar | 2.6 | 1.99 | 1.13 | 2.21 |
| Apricot vinegar, unheated | | 2.5 | | |
| Apricot vinegar, juice 30 min heated at 121 °C | | | 2.5 | |
| Apricot vinegar, juice 90 min heated at 121 °C | | | | 2.5 |

**Table 4 Visual assessment of mayonnaises containing apricot vinegar**

| *Sample* | *Appearance assessment mayonnaise* |
|---|---|
| Spirit vinegar | Off-white. Similar to commercial mayonnaise. |
| Apricot vinegar unheated | Off-white. Similar to commercial mayonnaise. |
| Apricot vinegar from heated juice: 30 min, 121°C | Off-white. Similar to commercial mayonnaise. |
| Apricot vinegar from heated juice: 90 min, 121°C | Off-white. Similar to commercial mayonnaise. |

The legenda of figure 3 is as follows:
**-▲-** spirit vinegar; **-◆-** apricot vinegar, unheated; -•- apricot vinegar, juice heated 30 min. at 121 °C; -∘- apricot vinegar, juice heated 90 min. at 121°C.

### Example 4

### Apricot vinegar, different heating times

The mayonnaise samples were prepared as described for Example 3, and the compositions were as depicted in Table 1 of Example 1, but instead of tomato vinegar, homemade apricot vinegar was used. The compositions had a pH of 3.8. Droplet size was below 10 micron.

In this experiment the difference was assessed between a heating time of 30 minutes and of 90 minutes of the vinegar. Oxygen concentration in the headspace during storage trial of mayonnaises at 50°C was determined, to see the influence of the vinegar (see Figure 4). Mayonnaises containing spirit vinegar (sample #13) shows a rapid decrease of oxygen concentration in the headspace, indicating that oxidation of oil is most rapid in these mayonnaises. The mayonnaise with unheated apricot vinegar (sample #14) shows a much slower decrease of oxygen concentration. The apricot vinegars heated for 30 minutes (sample #15) showed a significant reduction in oil oxidation. Heating the vinegar for 90 minutes (sample #16) showed an even stronger antioxidative. The color of the mayonnaises was off-white and similar to a commercial mayonnaise (Table 5). This shows that heating the vinegar, increases the antioxidant effect in oil in water emulsions. In this manner, a greater amount of EDTA can be replaced by natural antioxidant vinegar, without negatively affecting the color appearance of the mayonnaise.

**Table 3 Compositions of mayonnaises containing different apricot vinegars.**

| *Ingredient* | *Concentration [wt%]* | | | |
|---|---|---|---|---|
| | *#13* | *#14* | *#15* | *#16* |
| Water | 15.08 | 13.19 | 13.16 | 13.15 |
| Oil (rapeseed) | 75 | 75 | 75 | 75 |
| Sugar | 1.3 | 1.3 | 1.3 | 1.3 |
| Salt | 1.49 | 1.49 | 1.49 | 1.49 |
| Egg yolk | 4.2 | 4.2 | 4.2 | 4.2 |
| Flavours | 0.33 | 0.33 | 0.33 | 0.33 |
| Spirit vinegar | 2.6 | 1.99 | 2.02 | 2.03 |
| Apricot vinegar, unheated | | 2.5 | | |
| Apricot vinegar, heated 30 min at 121 °C | | | 2.5 | |
| Apricot vinegar, heated 90 min at 121 °C | | | | 2.5 |

**Table 5 Visual assessment of mayonnaises containing apricot vinegar**

| *Sample* | *Appearance assessment mayonnaise* |
|---|---|
| Spirit vinegar | Off-white. Similar to commercial mayonnaise. |
| Apricot vinegar unheated | Off-white. Similar to commercial mayonnaise. |
| Apricot vinegar, heated 30 min, 121°C | Off-white. Similar to commercial mayonnaise. |
| Apricot vinegar, heated 90 min, 121°C | Off-white. Similar to commercial mayonnaise. |

The legenda of figure 4 is as follows:
- **▲-** spirit vinegar
- **◆-** apricot vinegar, unheated
- **•-** apricot vinegar heated 30 min. at 121°C
- ∘- apricot vinegar heated 90 min. at 121°C

## Claims

1. Process for preparing a vinegar having a sugar content below 15 wt%, preferably below 10 wt%, the process comprising providing a starting vinegar derived from dicotyledonous plant material or preparing a starting vinegar according to the steps of:
a) Providing plant-derived material in liquid form or in aqueous dispersion, wherein the material is derived from a dicotyledonous plant or part thereof,
b) Subjecting the plant-derived material to ethanol fermentation,
c) Subjecting the fermented material resulting from step b) to acetic fermentation. to result in a starting vinegar,
and applying a heating regime according to one of the following time and temperature combinations:
• 90 to 105 °C, preferably 95 to 105°C: 1 to 4 hours, preferably from 1 to 3 hours, or
• 100 to 115 °C: 30 minutes to 3 hours, preferably 30 minutes to 2.5 hours, or
• 115 to 125 °C: 20 minutes to 2.5 hours, preferably 25 minutes to 2 hours, or
• 125 to 140 °C: 5 minutes to 1 hour, preferably 10 to 30 minutes,
on the plant-derived material of step a) or on the starting vinegar.

2. Process according to any one of the preceding claims, wherein *Saccharomyces cerevisiae* is added after step a).

3. Process according to any one of the preceding claims, wherein acetic acid bacteria, preferably *Acetobacter* or *Gluconobacter* added after step b).

4. Process according to any one of the preceding claims, wherein the plant-derived material is selected from the group consisting of seeds, juice of root or of fruit, and mixtures thereof.

5. Vinegar from dicotyledonous plant material, the vinegar comprising 5-hydroxymethylfuraldehyde, and having a sugar content of below 15 wt%, preferably below 10 wt%.

6. The vinegar according to claim 5, wherein the vinegar does not comprise lactic acid.

7. The vinegar according to claim 5 or 6, wherein the vinegar comprises 0 to 5 wt% of sugar.

8. The vinegar according to any one of claims 5 to 7 wherein the vinegar comprises 5-hydroxymethylfuraldehyde in an amount of from 0.01 to 4.00 mg/g, preferably from 0.02 to 2.00 mg/g, based on weight of the vinegar.

9. The vinegar according to any one of claims 5 to 8, wherein the dicotyledonous plant material is not grape.

10. Oil-in-water emulsified food composition comprising:
• Vegetable oil,
• A vinegar according to any one of claims 5 to 9,
• An oil-in-water emulsifier
• Water.

11. Oil-in-water emulsified food composition according to claim 10, wherein the composition comprises less than 0.007 wt%, preferably less than 0.005 wt% of ethylenediaminetetraacetic acid (EDTA), preferably wherein the composition is free from EDTA.

12. Oil-in-water emulsified food composition according to claim 10 or 11, wherein the vinegar is present in an amount of from 0.5 to 20 wt%, preferably of from 0.5 to 10 wt%, even more preferably of from 1 to 5 wt%, more preferably 1 to 3 wt%, based on the weight of the oil-in-water emulsion.

13. Oil-in-water emulsified food composition according to any one of claims 10 to 12, wherein the L* as measured according to the CIE L*a*b* scale is from 50 to 95, preferably of from 70 to 95, even more preferably of from 80 to 95, most preferably of from 85 to 95.

14. Oil-in-water emulsified food composition according to any one of claims 10 to 13, wherein the composition is a mayonnaise, a mayonnaise-like sauce or a salad dressing.

15. Use of a vinegar according to any one of claims 5 to 9, to reduce oxidation of oil in an oil-in-water emulsified food composition.

## Patentansprüche

1. Verfahren zur Herstellung eines Essigs mit einem Zuckergehalt von weniger als 15 Gew.-%, vorzugsweise weniger als 10 Gew.-%, wobei das Verfahren umfasst das Bereitstellen eines Ausgangsessigs, der aus dikotylem Pflanzenmaterial gewonnen wird, oder Herstellen eines Ausgangsessigs nach den Schritten:
a) Bereitstellen von pflanzlichem Material in flüssiger Form oder in wässriger Dispersion, wobei das Material aus einer dikotylen Pflanze oder einem Teil davon gewonnen wird,
b) Unterziehen des pflanzlichen Materials einer Ethanolfermentation,
c) Unterziehen des aus Schritt b) resultierenden fermentierten Materials einer Essigsäuregärung, um einen Ausgangsessig zu erhalten,
und Anwenden eines Heizregimes nach einer der folgenden Zeit- und Temperaturkombinationen:
• 90 bis 105°C, vorzugsweise 95 bis 105°C: 1 bis 4 Stunden, vorzugsweise 1 bis 3 Stunden, oder
• 100 bis 115°C: 30 Minuten bis 3 Stunden, vorzugsweise 30 Minuten bis 2,5 Stunden, oder
• 115 bis 125°C: 20 Minuten bis 2,5 Stunden, vorzugsweise 25 Minuten bis 2 Stunden, oder
• 125 bis 140°C: 5 Minuten bis 1 Stunde, vorzugsweise 10 bis 30 Minuten,
auf das pflanzliche Material aus Schritt a) oder auf den Ausgangsessig.

2. Verfahren nach irgendeinem der vorhergehenden Ansprüche, wobei Saccharomyces cerevisiae nach Schritt a) zugegeben wird.

3. Verfahren nach irgendeinem der vorhergehenden Ansprüche, wobei Essigsäurebakterien, vorzugsweise *Acetobacter* oder *Gluconobacter,* nach Schritt b) zugegeben werden.

4. Verfahren nach irgendeinem der vorhergehenden Ansprüche, wobei das pflanzliche Material aus der Gruppe, die aus Samen, Saft von Wurzeln oder Früchten und Mischungen davon besteht, ausgewählt ist.

5. Essig aus dikotylem Pflanzenmaterial, wobei der Essig 5-Hydroxymethylfurfural umfasst und einen Zuckergehalt von weniger als 15 Gew.-%, vorzugsweise weniger als 10 Gew.-%, aufweist.

6. Essig nach Anspruch 5, wobei der Essig keine Milchsäure umfasst.

7. Essig nach Anspruch 5 oder 6, wobei der Essig 0 bis 5 Gew.-% Zucker umfasst.

8. Essig nach irgendeinem der Ansprüche 5 bis 7, wobei der Essig 5-Hydroxymethylfurfural in einer Menge von 0,01 bis 4,00 mg/g, vorzugsweise von 0,02 bis 2,00 mg/g, bezogen auf das Gewicht des Essigs, umfasst.

9. Essig nach irgendeinem der Ansprüche 5 bis 8, wobei das dikotyle Pflanzenmaterial keine Traube ist.

10. Öl-in-Wasser-emulgierte Lebensmittelzusammensetzung, umfassend:
• Pflanzenöl,
• einen Essig nach irgendeinem der Ansprüche 5 bis 9,
• einen Öl-in-Wasser-Emulgator,
• Wasser.

11. Öl-in-Wasser-emulgierte Lebensmittelzusammensetzung nach Anspruch 10, wobei die Zusammensetzung weniger als 0,007 Gew.-%, vorzugsweise weniger als 0,005 Gew.-% Ethylendiamintetraessigsäure (EDTA) umfasst, wobei die Zusammensetzung vorzugsweise frei von EDTA ist.

12. Öl-in-Wasser-emulgierte Lebensmittelzusammensetzung nach Anspruch 10 oder 11, wobei der Essig in einer Menge von 0,5 bis 20 Gew.-%, vorzugsweise von 0,5 bis 10 Gew.-%, noch bevorzugter von 1 bis 5 Gew.-%, bevorzugter von 1 bis 3 Gew.-%, bezogen auf das Gewicht der Öl-in-Wasser-Emulsion, vorliegt.

13. Öl-in-Wasser-emulgierte Lebensmittelzusammensetzung nach irgendeinem der Ansprüche 10 bis 12, wobei der nach der CIE L*a*b-Skala gemessene L*-Wert zwischen 50 und 95, vorzugsweise zwischen 70 und 95, noch bevorzugter zwischen 80 und 95 und höchst bevorzugt zwischen 85 und 95 liegt.

14. Öl-in-Wasser-emulgierte Lebensmittelzusammensetzung nach irgendeinem der Ansprüche 10 bis 13, wobei die Zusammensetzung Mayonnaise, eine mayonnaiseähnliche Sauce oder ein Salatdressing ist.

15. Verwendung eines Essigs nach irgendeinem der Ansprüche 5 bis 9 zur Verringerung der Oxidation von Öl in einer Öl-in-Wasser-emulgierten Lebensmittelzusammensetzung.

## Revendications

1. Procédé de préparation d'un vinaigre ayant une teneur en sucre inférieure à 15 % en poids, de préférence inférieure à 10 % en poids, le procédé comprenant la fourniture d'un vinaigre de départ dérivé d'une matière d'une plante dicotylédone ou la préparation d'un vinaigre de départ selon les étapes de :
a) fourniture d'une matière dérivée de plante sous une forme liquide ou en dispersion aqueuse, où la matière est dérivée d'une plante dicotylédone ou d'une partie de celle-ci,
b) soumission de la matière dérivée de plante à une fermentation éthanolique,
c) soumission de la matière fermentée résultant de l'étape b) à une fermentation acétique,
pour donner un vinaigre de départ,
et application d'un régime de chauffage selon l'une des combinaisons de temps et de température suivantes :
- 90 à 105°C, de préférence 95 à 105°C : 1 à 4 heures, de préférence 1 à 3 heures, ou
- 100 à 115°C : 30 minutes à 3 heures, de préférence 30 minutes à 2,5 heures, ou
- 115 à 125°C : 20 minutes à 2,5 heures, de préférence 25 minutes à 2 heures, ou
- 125 à 140°C : 5 minutes à 1 heure, de préférence 10 à 30 minutes,
sur la matière dérivée de plante de l'étape a) ou sur le vinaigre de départ.

2. Procédé selon l'une quelconque des revendications précédentes, dans lequel *Saccharomyces cerevisiae* est ajouté après l'étape a).

3. Procédé selon l'une quelconque des revendications précédentes, dans lequel l'acide acétique bactérien, de préférence *Acetobacter* ou *Gluconobacter,* est ajouté après l'étape b).

4. Procédé selon l'une quelconque des revendications précédentes, dans lequel la matière dérivée de plante est choisie dans le groupe consistant en graines, jus de racine ou de fruit, et mélanges de ceux-ci.

5. Vinaigre provenant d'une matière de plante dicotylédone, le vinaigre comprenant du 5-hydroxyméthylfuraldéhyde, et ayant une teneur en sucre inférieure à 15 % en poids, de préférence inférieure à 10 % en poids.

6. Vinaigre selon la revendication 5, où le vinaigre ne comprend pas d'acide lactique.

7. Vinaigre selon la revendication 5 ou 6, où le vinaigre comprend 0 à 5 % en poids de sucre.

8. Vinaigre selon l'une quelconque des revendications 5 à 7, où le vinaigre comprend du 5-hydroxyméthylfuraldéhyde en une quantité allant de 0,01 à 4,00 mg/g, de préférence de 0,02 à 2,00 mg/g, sur la base du poids du vinaigre.

9. Vinaigre selon l'une quelconque des revendications 5 à 8, dans lequel la matière de plante dicotylédone n'est pas le raisin.

10. Composition alimentaire émulsifiée huile-dans-eau comprenant :
- une huile végétale,
- un vinaigre selon l'une quelconque des revendications 5 à 9,
- un émulsifiant huile-dans-eau,
- de l'eau.

11. Composition alimentaire émulsifiée huile-dans-eau selon la revendication 10, où la composition comprend moins de 0,007 % en poids, de préférence moins de 0,005 % en poids d'acide éthylènediaminetétraacétique (EDTA), de préférence où la composition est exempte d'EDTA.

12. Composition alimentaire émulsifiée huile-dans-eau selon la revendication 10 ou 11, dans laquelle le vinaigre est présent en une quantité allant de 0,5 à 20 % en poids, de préférence de 0,5 à 10 % en poids, même plus préférentiellement de 1 à 5 % en poids, plus préférentiellement de 1 à 3 % en poids, sur la base du poids de l'émulsion huile-dans-eau.

13. Composition alimentaire émulsifiée huile-dans-eau selon l'une quelconque des revendications 10 à 12, dans laquelle le L* tel que mesuré selon l'échelle CIEL*a*b* varie de 50 à 95, de préférence de 70 à 95, même plus préférentiellement de 80 à 95, de manière la mieux préférée de 85 à 95.

14. Composition alimentaire émulsifiée huile-dans-eau selon l'une quelconque des revendications 10 à 13, où la composition est une mayonnaise, une sauce de type mayonnaise ou une sauce pour salade.

15. Utilisation d'un vinaigre selon l'une quelconque des revendications 5 à 9, pour réduire l'oxydation de l'huile dans une composition alimentaire émulsifiée huile-dans-eau.
